# EUROPEAN PATENT APPLICATION

(11) **EP 3 040 752 A2**
(43) Date of publication of application: **06.07.2016**
(21) Application number: 15202275.2
(22) Date of filing: 23.12.2015
(51) Int. Cl.: G02B 7/00, G02B 27/01, G02C 7/02

(54) **ANTI-FOG OPTICAL DEVICE**

(30) Priority: 30.12.2014 KR 20140193212
(71) Applicant: JaeWoo Co., Ltd., Gyeonggi-do (KR)
(72) Inventor: LEE, Jae Yool, Gyeonggi-do (KR); LEE, Woo Jung, Gyeonggi-do (KR); KIM, Sun Kyung, Gyeonggi-do (KR)
(74) Representative: Betten & Resch

(57) **Abstract**

Anti-fog optical device including an outer lens-unit (10) having a front lens (14), an inner lens-unit (20) engaged with the inner wall of the outer lens-unit (10) to define an accommodation space (25) there between, a heat-blocking material disposed in the accommodation space (25) to block the transfer of heat, and an anti-leakage unit (30) engaged with a flange of the outer lens-unit (10) to prevent the heat-blocking material from leaking. The outer lens-unit (10) has an injection hole (16) allowing the heat-blocking material (e.g. air, silicon, oil) to be injected therethrough into the accommodation space (25).

## Description

### CROSS REFERENCE TO RELATED APPLICATION

The present application claims priority from Korean Patent Application Number 10-2014-0193212 filed on December 30, 2014, the entire contents of which are incorporated herein for all purposes by this reference.

### BACKGROUND

### Field of the Invention

The present disclosure relates to an optical device that is selectively used in a variety of physical activities including leisure sports. More particularly, the present disclosure relates to an anti-fog optical device able to prevent fog that would otherwise be caused by a difference in temperatures between the interior and the exterior of the optical device, whereby a clear field of view can be obtained for an activity.

### Description

In general, an optical device, such as a lens, is a convenience device used to ensure that a person has a clear field of view during physical activities, such as leisure sports. Such an optical device is commonly applied to goggles, swimming goggles, snorkeling goggles, display panels, and the like. When the surface of an optical device is fogged, the field of view of a wearer is obstructed, so the wearer cannot see through the optical device.

In particular, when such an optical device is applied to goggles, the surfaces of the goggles may be fogged due to a difference in temperatures while a wearer is rapidly sliding on snow on skis or a snowboard, such that the wearer cannot obtain a sufficient field of view. When such an optical device is applied to swimming goggles or snorkeling goggles, a warm air layer is formed on the inner surfaces of lenses due to the body temperature of the wearer but the outer surfaces of the lenses are cooled by water, such that the wearer cannot obtain a sufficient field of view. Thus, it is urgently required to prevent such optical devices from being fogged.

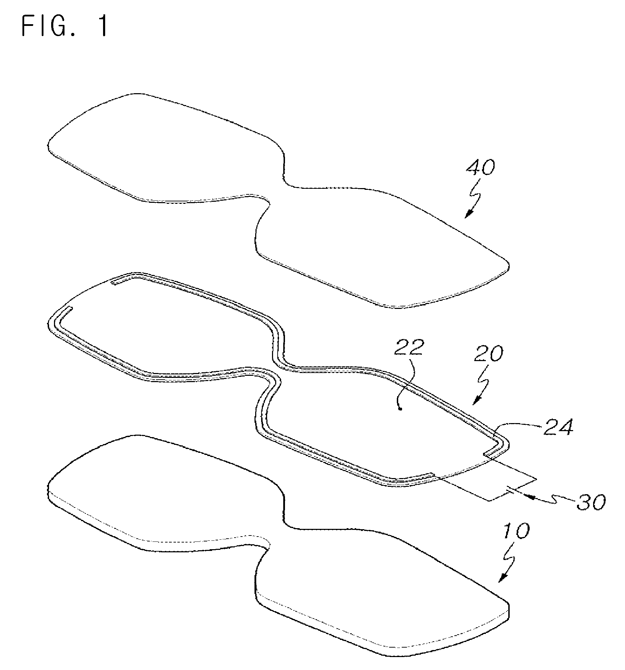

For example, an optical device of the related art, as illustrated in FIG. 1, has been proposed. The optical device includes a base substrate 10, a heat-generating layer 20 layered on the base substrate to generate heat in order to prevent or remove fog, a power supply 30 supplying power to the heat-generating layer 20, and an anti-fog film 40 layered on the heat-generating layer 20 to absorb moisture.

When the base substrate 10 is fogged due to a difference in temperatures during the use of the optical device, the heat-generating layer 20 generates heat using power supplied by the power supply 30. Consequently, heat generated by the heat-generating layer 20 prevents the base substrate 10 from being fogged or removes fog from the base substrate 10.

However, since the related-art optical device is configured by layering the heat-generating layer 20 and the power supply 30 in order to prevent the base substrate 10 from being fogged, incidental expenses may be caused. Thus, the ability of the optical device to be widely spread may be limited, since low costs and lightness are required in the optical device.

Therefore, the development of an optical device of which fabrication costs are able to be minimized, in which anti-fog efficiency is improved, is urgently required.

The information disclosed in the Background section is only provided for a better understanding of the background and should not be taken as an acknowledgment or any form of suggestion that this information forms prior art that would already be known to a person skilled in the art.

### Related Art Document

Patent Document 1: Korean Patent Application Publication No. 10-2010-0077789 (Published on July 8, 2010)

### BRIEF SUMMARY

Various aspects of the present disclosure provide an anti-fog optical device having a double-layer structure, in which a low heat transfer coefficient is disposed between double layers, whereby the anti-fog optical device can prevent fog that would otherwise be caused by a difference in temperatures between the interior and the exterior of the optical device.

According to an aspect, an anti-fog optical device may include: an outer lens unit including a front lens; an inner lens unit engaged with the inner wall of the outer lens unit to define an accommodation space having a predetermined size between the outer lens unit and the inner lens unit; a heat-blocking material disposed in the accommodation space to block the transfer of heat; and an anti-leakage unit engaged with a flange of the outer lens unit to prevent the heat-blocking material from leaking. The outer lens unit has an injection hole allowing the heat-blocking material to be injected therethrough into the accommodation space.

The present disclosure has the following effects:
First, it is possible to prevent fogging merely by forming the accommodation space in the optical device. Accordingly, the optical device can provide a clear field of view, and the optical device can be provided at low cost.
Second, since it is possible to prevent fogging merely by forming the accommodation space in the optical device, the optical device can be fabricated at low cost and to be lightweight. Accordingly, the optical device can be used in a greater range of physical activities including leisure sports.

The methods and apparatuses of the present disclosure have other features and advantages that will be apparent from, or are set forth in greater detail in the accompanying drawings, which are incorporated herein, and in the following Detailed Description of the Invention, which together serve to explain certain principles of the present disclosure.

### BRIEF DESCRIPTION OF THE DRAWINGS

FIG. 1 is an exploded perspective view illustrating an optical device of the related art;
FIG. 2 is an exploded perspective view illustrating an optical device according to a first exemplary embodiment;
FIG. 3A and FIG. 3B are cross-sectional views of the optical device shown in FIG. 2;
FIG. 4 is an exploded perspective view illustrating an optical device according to a second exemplary embodiment; and
FIG. 5A and FIG. 5B are cross-sectional views of the optical device shown in FIG. 4.

### DETAILED DESCRIPTION

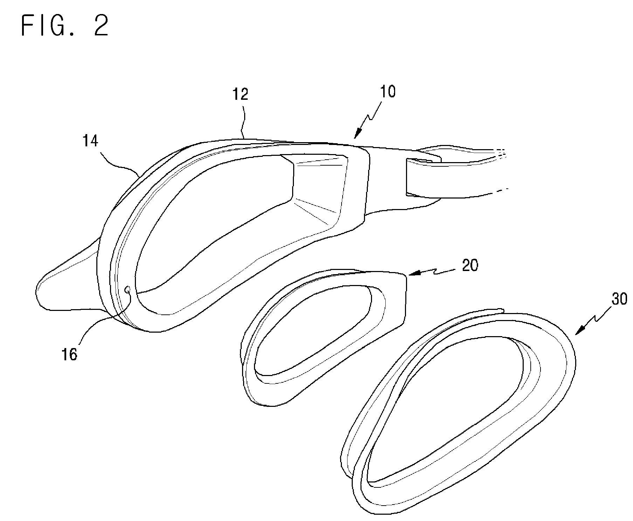

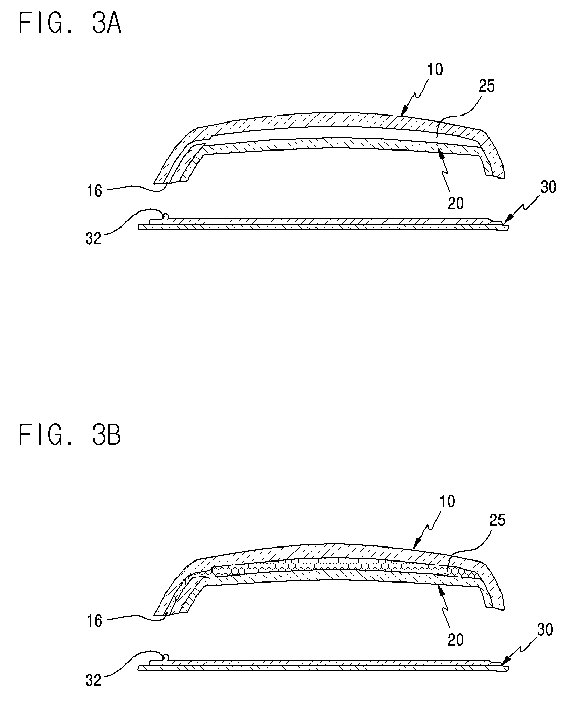

Hereinafter, an optical device according to a first exemplary embodiment will be described with reference to FIG. 2, FIG. 3A, and FIG. 3B.

As illustrated in FIG. 2, FIG. 3A, and FIG. 3B, the optical device according to the first exemplary embodiment includes: an outer lens unit 10 having a front lens 14; an inner lens unit 20 engaged with the inner wall of the outer lens unit 10 to define an accommodation space 25 having a predetermined size between the outer lens unit 10 and the inner lens unit 20; a heat-blocking material disposed in the accommodation space 25 to block the transfer of heat; and an anti-leakage unit 30 engaged with a flange of the outer lens unit 10 to prevent the heat-blocking material from leaking. The outer lens unit 10 has an injection hole 16 allowing the heat-blocking material to be injected therethrough into the accommodation space 25.

Here, outer lens unit 10, the inner lens unit 20, and the anti-leakage unit 30 are assembled together to form the optical device according to the present embodiment. In particular, the accommodation space 25 for minimizing the transfer of heat caused by a difference in temperatures between the interior and the exterior of the optical device is provided between the outer lens unit 10 and the inner lens unit 20.

In addition, the outer lens unit 10 includes a frame 12, a front lens 14, and the injection hole 16. The frame 12 defines the outer shape of the optical device while supporting the entire weight of the optical device. The frame 12 is brought into close contact to the portion of a user around an eye. The front lens 14 is disposed in the central portion of the frame 12. The injection hole 16 is used in the operation of injecting the heat-blocking material into the accommodation space 25.

It is preferable that the frame 12 be formed of a flexible material (e.g. by molding) such that the frame 12 does not cause an inconvenience to the user when the frame 12 is brought into close contact to the portion of the user around an eye.

It is preferable that the front lens 14 be formed integrally with the frame 12 (e.g. by molding). Alternatively, the front lens 14 may be engaged with the frame 12.

In addition, although a single injection hole 16 is formed in the frame 12, a plurality of injection holes may be formed in the frame 12 without departing from the scope of the present disclosure.

A concave recess having a predetermined size may be formed in the inner wall of the frame 12 in order to prevent the inner lens unit 20 from being dislodged from the frame 12.

The inner lens unit 20 is engaged with the inner wall of the frame 12 at a predetermined distance from the front lens 14 such that the accommodation space 25 having a predetermined size is defined between the inner lens unit 20 and the front lens 14, the heat-blocking material being accommodated in the accommodation space 25.

The heat-blocking material may be formed of one or a combination of two or more selected from among silicone, industrial oil, natural oil, and air.

A coating (not shown), such as an ultraviolet (UV) coating, a ceramic coating, or a silicone coating, may be formed on the inner wall surface of at least one of the outer lens unit 10 and the inner lens unit 20.

Alternatively, an anti-fog film may be attached to at least one of the outer lens unit 10 and the inner lens unit 20 without departing from the scope of the present disclosure.

In addition, the anti-leakage unit 30 is engaged with the flange of the outer lens unit 10 to prevent the inner lens unit 20 from being dislodged from the outer lens unit 10 while preventing the heat-blocking material from leaking. It is preferable that the anti-leakage unit 30 be formed of the same material as the outer lens unit 10. The anti-leakage unit 30 has a stopper lug 32 as a means for closing the injection hole 16.

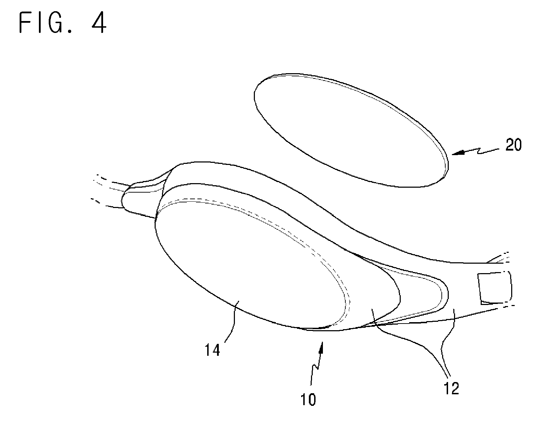

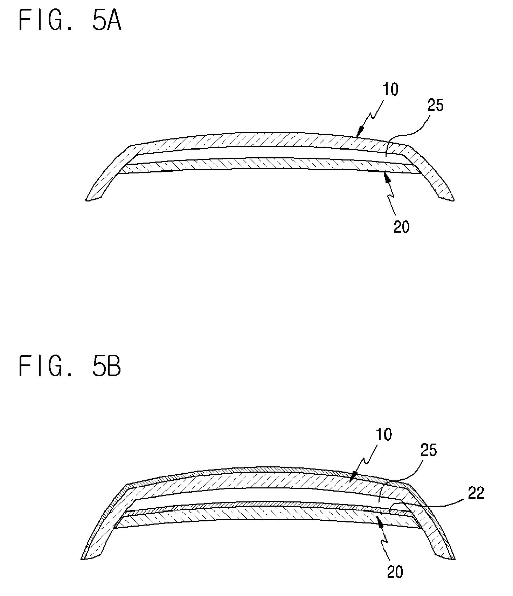

Hereinafter, an optical device according to a second exemplary embodiment will be described with reference to FIG. 4, FIG. 5A, and FIG. 5B.

As illustrated in FIG. 4, FIG. 5A, and FIG. 5B, the optical device according to the second exemplary embodiment includes: an outer lens unit 10 having a front lens 14; an inner lens unit 20 engaged with the inner wall of the outer lens unit 10 to define an accommodation space 25 having a predetermined size between the outer lens unit 10 and the inner lens unit 20; a heat-blocking material disposed in the accommodation space 25 to block the transfer of heat; and a coating 22 formed on the inner wall surface of the outer lens unit 10 or the inner lens unit 20. The heat-blocking material is air, and the coating 22 is one selected from among a UV coating, a ceramic coating, a silicone coating, or an anti-fog coating.

Here, the outer lens unit 10 includes a frame 12 and a front lens 14. The frame 12 defines the outer shape of the optical device while supporting the entire weight of the optical device. The frame 12 is brought into close contact to the portion of a user around an eye. The front lens 14 is disposed in the central portion of the frame 12.

It is preferable that the frame 12 be formed of a flexible material (e.g. by molding) such that the frame 12 does not cause an inconvenience to the user when the frame 12 is brought into close contact to the portion of the user around an eye.

It is preferable that the front lens 14 be formed integrally with the frame 12 (e.g. by molding). Alternatively, the front lens 14 may be engaged with the frame 12.

A concave recess having a predetermined size may be formed in the inner wall of the frame 12 in order to prevent the inner lens unit 20 from being dislodged from the frame 12.

The inner lens unit 20 is engaged with the inner wall of the frame 12 at a predetermined distance from the front lens 14 such that the accommodation space 25 having a predetermined size is defined between the inner lens unit 20 and the front lens 14, the heat-blocking material being accommodated in the accommodation space 25.

The heat-blocking material interposed between the outer lens unit 10 and the inner lens unit 20 is air.

A coating 22 is formed on the inner wall surface of at least one of the outer lens unit 10 and the inner lens unit 20 in order to increase the ability to block the transfer of heat. The coating 22 may be implemented as a UV coating, a ceramic coating, a silicone coating, or an anti-fog film.

Hereinafter, functional effects according to the present disclosure will be described by referring to the first exemplary embodiment.

First, in the case of assembling the optical device according to the present disclosure, the accommodation space 25 is formed by engaging the inner lens unit 20 with a predetermined portion of the outer lens unit 10, and the heat-blocking material is injected through the injection hole 16.

Afterwards, the anti-leakage unit 30 is abutted to and is subsequently engaged with the outer lens unit 10, such that the stopper lug 32 is fitted into the injection hole 16, thereby preventing the heat-blocking material from leaking from the accommodation space 25.

In this manner, the heat-blocking material is filled in the space between the front lens 14 and the inner lens unit 20, thereby preventing the transfer of heat therebetween that would otherwise be caused by a difference in temperatures between the outer lens unit 10 and the inner lens unit 20.

The foregoing descriptions of specific exemplary embodiments of the present disclosure have been presented with respect to the drawings. They are not intended to be exhaustive or to limit the present disclosure to the precise forms disclosed, and obviously many modifications and variations are possible for a person having ordinary skill in the art in light of the above teachings. It is intended therefore that the scope of the present disclosure not be limited to the foregoing embodiments, but be defined by the Claims appended hereto and their equivalents.

## Claims

1. An anti-fog optical device comprising:
an outer lens unit including a front lens;
an inner lens unit engaged with an inner wall of the outer lens unit to define an accommodation space having a predetermined size between the outer lens unit and the inner lens unit;
a heat-blocking material disposed in the accommodation space to block transfer of heat; and
an anti-leakage unit engaged with a flange of the outer lens unit to prevent the heat-blocking material from leaking,
wherein the outer lens unit has an injection hole allowing the heat-blocking material to be injected therethrough into the accommodation space.

2. The anti-fog optical device according to claim 1, wherein the heat-blocking material comprises one selected from the group consisting of silicone, industrial oil, natural oil, and air.

3. The anti-fog optical device according to claim 1 or 2, wherein at least one of the first outer lens unit and the inner lens unit comprises an anti-fog coating thereon.

4. An anti-fog optical device comprising:
an outer lens unit including a front lens;
an inner lens unit engaged with an inner wall of the outer lens unit to define an accommodation space having a predetermined size between the outer lens unit and the inner lens unit;
a heat-blocking material disposed in the accommodation space to block transfer of heat; and
an anti-fog coating formed on an inner wall surface of the outer lens unit or the inner lens unit,
wherein the heat-blocking material comprises air, and the coating comprises one selected from the group consisting of an ultraviolet coating, a ceramic coating, a silicone coating, or an anti-fog coating.
